# EUROPÄISCHE PATENTSCHRIFT

(11) **EP 1 995 463 B1**
(45) Veröffentlichungstag und Bekanntmachung des Hinweises auf die Patenterteilung: **11.07.2018**
(21) Anmeldenummer: 08009352.9
(22) Anmeldetag: 21.05.2008
(51) Int. Cl.: F04D 17/12, F04D 25/04, F04D 29/58

(54) **Mehrstufige Verdichtereinheit mit Kühleinrichtung**
Multi stage compressor unit with cooling device
Compresseur à plusieurs étages dotée d'un dispositif de refroidissement

(30) Priorität: 24.05.2007 DE 102007024633
(43) Veröffentlichungstag der Anmeldung: 26.11.2008
(73) Patentinhaber: MAHLE Behr GmbH & Co. KG, 70469 Stuttgart (DE)
(72) Erfinder: Wegner, Jürgen, 73054 Eislingen (DE); Huster, Joachim, 88048 Berg (DE)
(74) Vertreter: Grauel, Andreas

(56) Entgegenhaltungen:
- EP-A1- 1 505 274
- DE-A1- 2 420 308
- DE-B- 1 093 040
- US-A- 2 612 310
- US-A- 3 257 797
- US-A- 5 795 138
- US-A1- 2004 055 740
- US-B1- 6 398 517

## Beschreibung

Die vorliegende Erfindung betrifft eine mehrstufige Verdichtereinheit mit Kühleinrichtung, wie sie beispielsweise bei Kraftfahrzeugen zum Einsatz kommt.

Aus dem Stand der Technik ist bekannt, dass sich die Leistung eines Verbrennungsmotors steigern lässt, wenn zusätzlich ein Turbolader eingesetzt wird. Wird die Ladeluft für den Verbrennungsmotor vor der Zündung in der Brennkammer verdichtet, so wird die innere Leistung des Verbrennungsmotors aufgrund eines höheren Luftmengen- und Kraftstoffdurchsatz pro Arbeitstakt gesteigert. Durch die Kompression eines Luftvolumens steigt dessen Temperatur an, während die Dichte der erwärmten Luft abnimmt. Mit einer derartig aufbereiteten Ladeluft ist die Leistungssteigerung durch die verdichtete Ladeluft noch gering. Aus diesem Grund ist es erforderlich, dass die verdichtete Ladeluft vor dem Eintritt in die Brennkammer abgekühlt wird. Dies geschieht in der Regel mit Hilfe eines Ladeluftkühlers. Bei einer mehrstufigen Verdichtung der Ladeluft ist zwischen einem Niederdruck-Verdichter und einem Hochdruck-Verdichter ein Zwischenkühler angeordnet.

Die bisher eingesetzten Zwischenkühler bauen recht groß. Da die Ein- und Auslässe der Verdichtergehäuse dabei recht weit voneinander beabstandet sind, müssen für den zwischenliegend angeordneten Zwischenkühler aufwändige Verbindungselemente mit jeweils einem langen Leitungsweg verwendet werden.

Aus der EP 1 505 274 A1 ist ein Zwischenkühler für einen zweistufigen Abgasturbolader bekannt, der aus einem Niederdruck- und einem Hochdruck-verdichter besteht. Der Ladeluftkühler weist einen ladeluftführenden Verbindungskanal auf, welcher die beiden Verdichter miteinander verbindet und einen innenliegenden Kühleinsatz aufweist. Der Zwischenkühler ist über Verbindungselemente mit dem Motor verbunden. Zuführ- / Abführöffnungen der Strömungsöffnungen sind in dem Verbindungskanal ausgebildet und mit einer Klimaanlage des Fahrzeugs verbunden.

Aus der DE2420308 A1 ist ein weiterer zweistufiger Abgasturbolader mit einem Zwischenkühler bekannt.

Die vorliegende Erfindung stellt sich die Aufgabe, eine verbesserte mehrstufige Verdichtereinheit mit Kühleinrichtung zur Verfügung zu stellen.

Diese Aufgabe wird erfindungsgemäß durch eine mehrstufige Verdichtereinheit mit Kühleinrichtung gemäß Anspruch 1 gelöst.

Eine erfindungsgemäße Verdichtereinheit mit Kühleinrichtung, welche insbesondere in Kraftfahrzeugen eingesetzt werden kann, besteht aus einer Niederdruckladeeinrichtung mit einem Niederdruckverdichtergehäuse, einer Hochdruckladeeinrichtung mit einem Hochdruckverdichtergehäuse und einer Kühleinrichtung. Die Kühleinrichtung weist ein Kühleinrichtungsgehäuse auf, welches mittelbar mit dem Niederdruckverdichtergehäuse der Niederdruckladeeinrichtung und dem Hochdruckverdichtergehäuse der Hochdruckladeeinrichtung verbunden ist.

Vorteilhafterweise wird der erforderliche Einbauraum für die Verdichter und die Kühleinrichtung aufgrund der kompakten Anordnung der erfindungsgemäßen Kühleinrichtung und der Verdichter gegenüber einer Anordnung gemäß dem Stand der Technik verringert.

Ein weiterer Vorteil einer erfindungsgemäßen Kühleinrichtung kann darin bestehen, dass diese aufgrund der mittelbaren Verbindungen an den Schnittstellen zu den Verdichtern vorteilhafterweise leicht ausgewechselt oder für Reparaturen aus- und eingebaut werden kann.

Die Kühleinrichtung für die erfindungsgemäße mehrstufige Verdichtereinheit weist vorteilhaft Strömungskanäle für ein Kühlmittel auf.

Ein Strömungskanal in der Kühleinrichtung weist eine Längsrichtung auf, die bevorzugt mit der Hauptströmungsrichtung der durchtretenden Luft identisch ist. Der Strömungskanal ist vorzugsweise in Gestalt eines im Wesentlichen kreisrunden Querschnitts ausgebildet, es sind aber auch davon abweichende Querschnittsformen möglich. Die Längsachse des Strömungskanals kann gerade oder gekrümmt verlaufen.

Im Niederdruckverdichtergehäuse sind Strömungskanäle als Zuführ- / Abführkanäle für das Kühlmittel ausgebildet. Diese können vorteilhaft alternativ oder zusätzlich im Hochdruckverdichtergehäuse ausgebildet sein. Ihr Querschnitt ist vorzugsweise in Gestalt eines im Wesentlichen kreisrunden Querschnitts ausgebildet, es sind aber auch davon abweichende Querschnittsformen möglich. Diese Strömungskanäle lassen sich vorteilhaft an einen Kühlmittelkreis einer Klimaanlage anschließen. Die Anschlüsse für die Kühlmittelleitungen von einem Klimaanlagensystem an die Strömungskanäle in einem Druckverdichtergehäuse können somit stabiler ausgebildet werden.

In einer Ausführungsform kann die Kühleinrichtung in einem der beiden Druckverdichtergehäuse integriert oder untergebracht sein, wobei sich das Druckverdichtergehäuse von einem Einlass bzw. Auslass in einer Längsrichtung derart erstreckt, dass die Kühleinrichtung darin aufgenommen werden kann.

Die Kühleinrichtung ist bevorzugt ein Rohrbündelkühler, da dieser aufgrund seiner kompakten Bauweise entlang seiner Längsrichtung eine hohe Volumenleistungsdichte für die abzuführende Wärme aufweist. Es sind aber auch andere Wärmetauscher mit einer kompakten Bauform möglich.

In einer vorteilhaften erfindungsgemäßen Ausführungsform der mehrstufigen Verdichtereinheit weist mindestens ein Druckverdichtergehäuse der Druckladeeinrichtung einen Flansch auf, wobei der Querschnitt des Flansches von komprimierter Luft und mindestens einem Kühlmittelstrom durchströmt wird. Ein entsprechender Flansch an der Kühleinrichtung kann mit dem Flansch vom Druckverdichtergehäuse vorzugsweise verschraubt, verrastet, verklebt und / oder verschweißt werden, es sind aber auch weitere übliche Befestigungsmittel nach dem Stand der Technik einsetzbar. Erfindungsgemäß ist eine Verbindung zwischen einem Auslass bzw. Einlass einer Druckladeeinrichtung und einem Einlass bzw. Auslass der Kühleinrichtung als ein Verbindungsteil ausgebildet, wobei eine erste Seite des Verbindungsteils im Querschnitt im Wesentlichen dem Einlass bzw. Auslass einer Druckladeeinrichtung entspricht, und eine zweite Seite des Verbindungsteils im Querschnitt im Wesentlichen dem Einlass bzw. Auslass der Kühleinrichtung entspricht. Der Querschnitt der ersten Seite und der Querschnitt der zweiten Seite des Verbindungsteils sind in der Regel unterschiedlich. Der erste Querschnitt weist bevorzugt die Gestalt eines Kreises auf. Der zweite Querschnitt weist die Gestalt eines Einlasses für die Kühleinrichtung auf, welche bevorzugt rechteckförmig oder quadratisch ist.

Bevorzugt weisen die Querschnitte für die Strömungskanäle für das Kühlmittel Ein- / Austrittsquerschnitte in einem Druckverdichtergehäuse auf, welche im Wesentlichen in einer Ebene angeordnet sein können. Die Strömungskanäle für das Kühlmittel in dem Druckverdichtergehäuse sind des weiteren bevorzugt nebeneinander angeordnet, wodurch sich vorteilhafterweise eine kompakte Anordnung der Strömungskanäle für das Druckverdichtergehäuse ergibt.

Vorteilhafterweise können aufgrund der mittelbaren Befestigung der Kühleinrichtung zwischen den Druckverdichtergehäusen Befestigungselemente entfallen. Der Wegfall der bislang erforderlichen Befestigungselemente für die Kühleinrichtung am Motor sorgt vorteilhaft für eine Reduzierung des Gewichts der mehrstufigen Verdichtereinheit und erhöht die Flexibilität in Bezug auf die Anordnung der Kühleinrichtung im Bereich des Motors.

Bevorzugt ist wenigstens ein Strömungskanal innerhalb des Kühleinrichtungsgehäuses und wenigstens ein weiterer Strömungskanal außerhalb des Kühleinrichtungsgehäuses angeordnet. Vorteilhafterweise wird das aus der Kühleinrichtung ausströmende und von der Ladeluft erwärmte Kühlmittel in einem Strömungskanal abgeführt, welcher außerhalb des Kühleinrichtungsgehäuses angeordnet ist. Das außerhalb des Kühleinrichtungsgehäuses abgeführte Kühlmittel kann somit vorteilhaft auf dem Weg zum Klimaanlagensystem seine Wärme über die Strömungskanäle teilweise an die Umgebung abgeben und erwärmt nicht die Ladeluft.

Vorteilhafterweise kann sich eine verlustarme Ladeluftführung in den Verbindungsbereichen zwischen der Kühleinrichtung und den Verdichtern ergeben. Denn zum einen muss die Ladeluft nur einen kurzen Weg in den Verbindungsbereichen zurücklegen und zum anderen muss die Ladeluft in den Verbindungsbereichen nicht umgelenkt werden, da die Ladeluft aus einem Austrittsquerschnitt in der Hauptströmungsrichtung der Ladeluft austritt. Kurz ausgebildete Verbindungsbereiche zwischen der Kühleinrichtung und den Verdichtern mit entsprechend kleinen Ladeluftvolumen sind hinsichtlich der Geräuschentwicklung der Kühleinrichtung besonders vorteilhaft, da die Eigenfrequenzen des Ladeluftvolumens in den Verbindungsbereichen durch den kurzen Abstand zwischen der Kühleinrichtung und dem Verdichter vorteilhaft verschoben werden. Durch kurz ausgebildete Verbindungsbereiche kann vorteilhafterweise auch ein geringerer Druckverlust auf der Ladeluftseite realisiert werden, und damit die Leistung der Verdichtereinheit gesteigert werden.

Aus kleinen Ladeluftvolumen in den oben genannten Verbindungsbereichen resultiert des weiteren eine verkürzte Ansprechzeit des Motors auf eine gewünschte Geschwindigkeitssteigerung durch den Fahrer. Die zusätzliche Motorleistung kann dann schneller zur Verfügung gestellt werden.

Weitere Vorteile, Merkmale und Anwendungsmöglichkeiten der vorliegenden Erfindung ergeben sich aus der nachfolgenden Beschreibung in Zusammenhang mit den Figuren. Hierzu zeigt, teilweise schematisiert:
- Fig. 1: eine perspektivische Ansicht eines mehrstufigen Verdichters mit Zwischenkühler nach einer Ausführung der vorliegenden Erfindung,
- Fig. 2: eine Draufsicht des mehrstufigen Verdichters mit Zwischenkühler gemäß Fig. 1, und
- Fig. 3: eine Schnittansicht einer Steckrohrverbindung von der Seite.

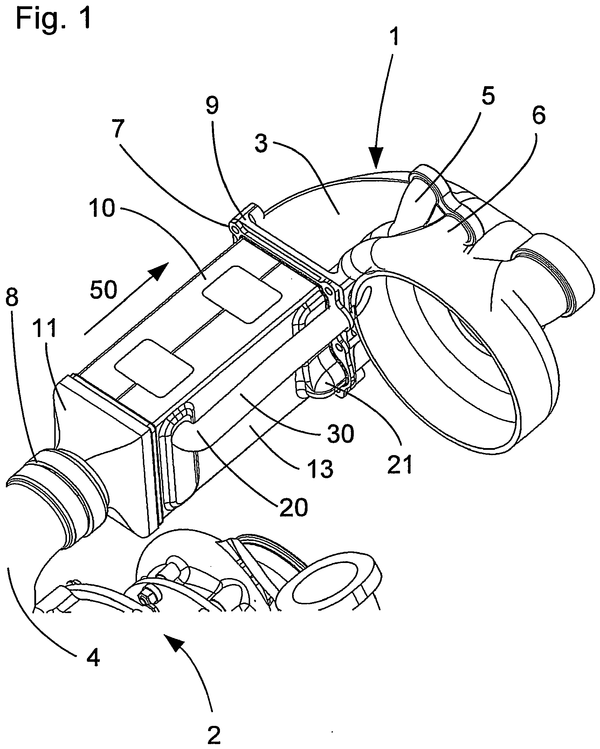

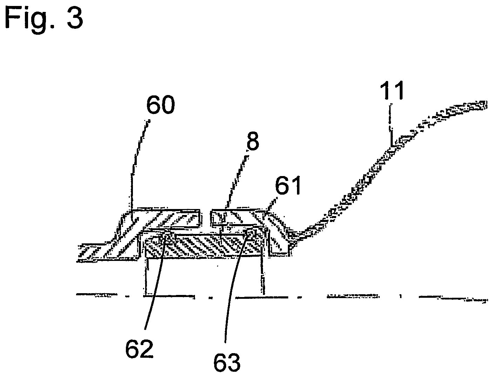

Fig. 1 zeigt in perspektivischer Ansicht eine mehrstufige Verdichtereinheit mit einem Zwischenkühler 10 nach einer bevorzugten Ausführungsform der vorliegenden Erfindung. Die mehrstufige Verdichtereinheit weist einen Niederdruck-Verdichter 2 mit einem Niederdruckverdichtergehäuse 4 und einen Niederdruck-Verdichterauslass, welcher sich in einen Kanal in Hauptströmungsrichtung 50 erstreckt, einen Zwischenkühler 10 und einen Hochdruck-Verdichter 1 mit einem Hochdruckverdichtergehäuse 3 auf. Das Niederdruckverdichtergehäuse 4 ist über ein Verbindungsteil in Form eines Steckrohrs 8 mit einem Diffusor 11 des Zwischenkühlers 10 verbunden, wobei das Steckrohr 8 als einstückiges Bauteil ausgebildet ist. Eine Schnittansicht dieser Steckrohrverbindung ist in Fig. 3 dargestellt. Die Ladeluft wird im Austritt aus dem Niederdruckverdichtergehäuse 4 nicht umgelenkt.

Der Zwischenkühler 10 ist ein Rohrbündelkühler, der einfach durchströmt ist. Der Zwischenkühler 10 weist einen Auslass mit einem zugehörigen Zwischenkühlerflansch 7 auf, welcher mit einem Hochdruckverdichterflansch 9 an einem Einlass am Hochdruckverdichtergehäuse 3 verschraubt ist. Der Zwischenkühlerflansch 7 weist in dieser Ausführungsform von einem Kühlmittel entgegen der Hauptströmungsrichtung 50 und einen anderen von verdichteter Luft aus den Zwischenkühler 10 in Hauptströmungsrichtung 50 durchströmte Querschnitte auf. In einer nicht dargestellten Abwandlung können das Kühlmittel und die verdichtete Luft im Gleichstrom beide in Hauptströmungsrichtung 50 geführt werden. Der Zwischenkühler 10 weist eine Längsachse auf, welche im Wesentlichen in Ausströmungsrichtung der Ladeluft aus dem Niederdruckverdichtergehäuse 4 verläuft.

Die Gestaltung des Zwischenkühlergehäuses 13 ist im Wesentlichen rechteckig. Auf einer Seite des Zwischenkühlergehäuses 13 erstreckt sich von dem Zwischenkühlerflansch 7 bis in einen Bereich des Einlasses des Zwischenkühlers 10 entgegen der Hauptströmungsrichtung 50 ein im Wesentlichen zylinderförmiger Strömungskanal 30 mit einer Außenwand, wobei dessen Längsrichtung im Wesentlichen parallel zur Hauptströmungsrichtung 50 ist. In dieser Ausführungsform verläuft der Strömungskanal 30 außerhalb des Zwischenkühlergehäuses 13. In einer nicht dargestellten Abwandlung kann der Strömungskanal 30 auch innerhalb des Zwischenkühlergehäuses 13 verlaufen. Auf einer dem Zwischenkühlerflansch 7 gegenüber liegenden Seite des Strömungskanals 30 erstreckt sich ein Kühlmitteleinlass 20 senkrecht zur Hauptströmungsrichtung 50 der Ladeluft in den Zwischenkühler 10. Der Kühlmitteleinlass 20 weist einen im Wesentlichen kreisrunden Querschnitt auf. Das Kühlmittel wird mit einer ersten Temperatur über einen Kühlmitteleinlass 21 dem Zwischenkühler 10 zugeführt und erwärmt sich während des Durchströmens des Zwischenkühlers 10 entgegen der Hauptströmungsrichtung 50 auf eine zweite Temperatur, welche gegenüber der ersten Temperatur erhöht ist. Das Kühlmittel tritt dann am Kühlmittelauslass 20 aus dem Zwischenkühler 10 aus und wird über den Strömungskanal 30 an das Klimaanlagensystem zurückgeführt.

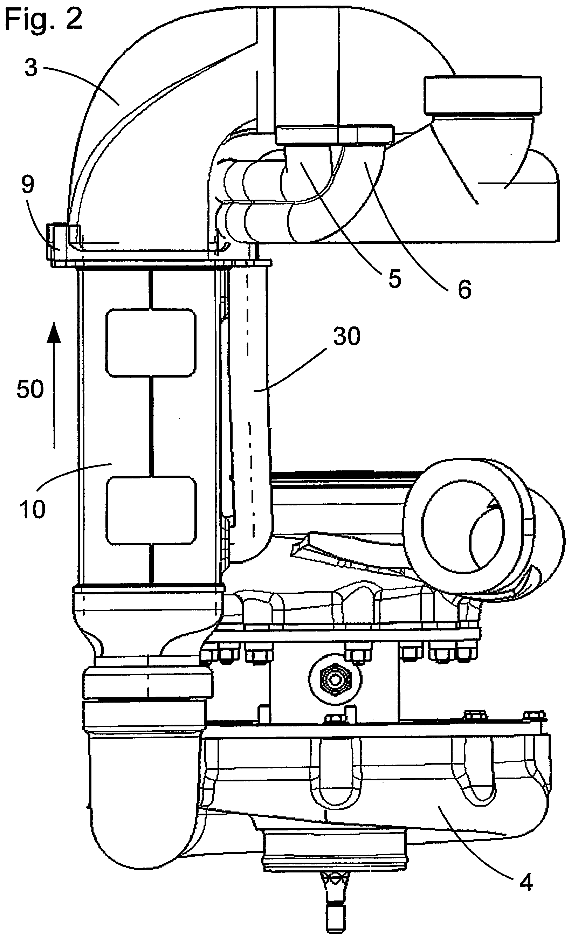

Fig. 2 zeigt eine Draufsicht der mehrstufigen Verdichtereinheit mit Zwischenkühler 10 gemäß Fig. 1. Das Hochdruckverdichtergehäuse 3 weist auf einer Seite je einen Strömungskanal für einen Zulauf 5 und einen Strömungskanal für einen Ablauf 6 des Kühlmittels für den Zwischenkühler 10 auf. Die Querschnitte im Endbereich der Strömungskanäle münden jeweils in den Hochdruckverdichterflansch 9. Die Strömungskanäle 5, 6 für die Kühlmittelversorgung sind jeweils in dem Hochdruckverdichtergehäuse 3 ausgebildet.

Fig. 3 zeigt eine Schnittansicht von der Seite für die Steckrohrverbindung zwischen dem Niederdruckladeluftkühler 2 und dem Zwischenkühler 10 gemäß Fig. 1. Das Niederdruckverdichtergehäuse 4 weist auf einer Seite ein Anschlussrohr 60 auf, mit einem im Wesentlichen kreisförmigen Querschnitt. Der Innendurchmesser des Anschlussrohres 60 ist im Wesentlichen mit dem Außendurchmesser des Steckrohrs 8 identisch, so dass das Steckrohr 8 reibschlüssig im Anschlussrohr 60 festgelegt ist. Der Diffusor 11 weist auf der Seite, welche dem Zwischenkühler 10 zugewandt ist, einen Auslassquerschnitt auf, welcher im Wesentlichen mit dem Querschnitt des Einlasses des Zwischenkühlers 10 identisch ist. Im Bereich eines Anschlussrohrs 61 zur Steckverbindung weist der Diffusor 11 auf seiner Innenseite einen Durchmesser auf, welcher im Wesentlichen mit dem Außendurchmesser des Steckrohrs 8 identisch ist, so dass das Steckrohr 8 reibschlüssig im Anschlussrohr 61 festgelegt ist. Der Strömungskanal für die verdichtete Ladeluft ist im Bereich des Steckrohrs 8 gegen die Umgebung mit jeweils einer Dichtung 62, 63 im Bereich der jeweiligen Anschlussrohre 60, 61 abgedichtet.

## Patentansprüche

1. Mehrstufige Verdichtereinheit, bestehend aus einer Niederdruckladeeinrichtung (2) mit einem Niederdruckverdichtergehäuse (4), einer Hochdruckladeeinrichtung (1) mit einem Hochdruckverdichtergehäuse (3) und einer Kühleinrichtung (10), wobei die Kühleinrichtung (10) ein Kühleinrichtungsgehäuse (13) aufweist und das Kühleinrichtungsgehäuse (13) der Kühleinrichtung (10) mittelbar mit dem Niederdruckverdichtergehäuse (4) der Niederdruckladeeinrichtung (2) und dem Hochdruckverdichtergehäuse (3) der Hochdruckladeeinrichtung (1) verbunden ist und die Kühleinrichtung (10) Strömungskanäle für ein Kühlmittel aufweist, wobei eine Verbindung zwischen einem Auslass bzw. Einlass einer Druckladeeinrichtung (1, 2) und einem Einlass bzw. Auslass der Kühleinrichtung (10) als ein Verbindungsteil (8) ausbildet, wobei eine erste Seite des Verbindungsteils (8) im Querschnitt im Wesentlichen dem Einlass bzw. Auslass einer Druckladeeinrichtung (1, 2) entspricht, und eine zweite Seite des Verbindungsteils (8) im Querschnitt im Wesentlichen dem Einlass bzw. Auslass der Kühleinrichtung (10) entspricht, **dadurch gekennzeichnet, dass** im Niederdruckverdichtergehäuse (4) Strömungskanäle für das Kühlmittel ausgebildet sind.

2. Mehrstufige Verdichtereinheit gemäß Anspruch 1, **dadurch gekennzeichnet, dass** im Hochdruckverdichtergehäuse (3) Strömungskanäle für das Kühlmittel ausgebildet sind.

3. Mehrstufige Verdichtereinheit gemäß einem der vorhergehenden Ansprüche, **dadurch gekennzeichnet, dass** mindestens ein Druckverdichtergehäuse (3, 4) einer Druckladeeinrichtung (1, 2) einen Flansch (7) aufweist, wobei der Querschnitt des Flansches (7) von komprimierter Luft und mindestens einem Kühlmittelstrom durchflossen wird, und dass eine Verbindung zwischen einem Auslass bzw. Einlass einer Druckladeeinrichtung (1, 2) und einem Einlass bzw. Auslass der Kühleinrichtung (10) als eine Flanschverbindung ausgebildet ist.

4. Mehrstufige Verdichtereinheit gemäß einem der vorhergehenden Ansprüche, **dadurch gekennzeichnet, dass** die Kühleinrichtung (10) mit einem Kühlmittelkreis eines Klimaanlagensystems verbunden ist.

5. Mehrstufige Verdichtereinheit gemäß einem der vorhergehenden Ansprüche, **dadurch gekennzeichnet, dass** die Kühleinrichtung (10) einen Rohrbündelkühler umfasst.

6. Mehrstufige Verdichtereinheit gemäß einem der vorhergehenden Ansprüche, **dadurch gekennzeichnet, dass** die Querschnitte für die Strömungskanäle für das Kühlmittel Ein- /Austrittsquerschnitte in einem Druckverdichtergehäuse (3, 4) aufweisen, welche im Wesentlichen in einer Ebene angeordnet sind.

7. Mehrstufige Verdichtereinheit gemäß einem der vorhergehenden Ansprüche, **dadurch gekennzeichnet, dass** die Strömungskanäle in einem Druckverdichtergehäuse (3, 4) wenigstens teilweise nebeneinander angeordnet sind.

8. Mehrstufige Verdichtereinheit gemäß einem der vorhergehenden Ansprüche, **dadurch gekennzeichnet, dass** wenigstens ein Strömungskanal innerhalb des Kühleinrichtungsgehäuse (13) und wenigstens ein weiterer Strömungskanal außerhalb des Kühleinrichtungsgehäuse (13) angeordnet ist.

9. Mehrstufige Verdichtereinheit gemäß einem der vorhergehenden Ansprüche, **dadurch gekennzeichnet, dass** die Strömungskanäle Zuführ- und Abführkanäle eines Kühlmittels umfassen.

10. Mehrstufige Verdichtereinheit gemäß einem der vorhergehenden Ansprüche, **dadurch gekennzeichnet, dass** komprimierte Luft in einem Austrittsquerschnitt keine Umlenkung erfährt.

## Claims

1. A multistage compressor unit, consisting of a low-pressure charging device (2) having a low-pressure compressor housing (4), a high-pressure charging device (1) having a high-pressure compressor housing (3) and a cooling device (10), wherein the cooling device (10) has a cooling device housing (13) and the cooling device housing (13) of the cooling device (10) is indirectly connected to the low-pressure compressor housing (4) of the low-pressure charging device (2) and the high-pressure compressor housing (3) of the high-pressure charging device (1) and the cooling device (10) has flow channels for a coolant, wherein a joint is constructed between an outlet or inlet of a pressure charging device (1, 2) and an inlet or outlet of the cooling device (10) as a connecting part (8), wherein a first side of the connecting part (8) substantially corresponds in cross-section to the inlet or outlet of a pressure charging device (1, 2) and a second side of the connecting part (8) substantially corresponds in cross-section to the inlet or outlet of the cooling device (10), **characterised in that** in the low-pressure compressor housing (4) flow channels for the coolant are constructed.

2. The multistage compressor unit according to claim 1, **characterised in that** in the high-pressure compressor housing (3) flow channels for the coolant are constructed.

3. The multistage compressor unit according to one of the preceding claims, **characterised in that** at least one compressor housing (3, 4) of a pressure charging device (1, 2) comprises a flange (7), wherein compressed air and at least one stream of coolant flows through the cross-section of the flange (7) and that a connection between an outlet or inlet of a pressure charging device (1, 2) and an inlet or outlet of the cooling device (10) is constructed as a flange connection.

4. The multistage compressor unit according to one of the preceding claims, **characterised in that** the cooling device (10) is connected to a coolant circuit of an air-conditioning system.

5. The multistage compressor unit according to one of the preceding claims, **characterised in that** the cooling device (10) comprises a shell-and-tube cooler.

6. The multistage compressor unit according to one of the preceding claims, **characterised in that** the cross-sections for the flow channels for the coolant have inlet/outlet cross-sections in a compressor housing (3, 4) which are arranged substantially in a plane.

7. The multistage compressor unit according to one of the preceding claims, **characterised in that** the flow channels are arranged in a compressor housing (3, 4) at least in part beside one another.

8. The multistage compressor unit according to one of the preceding claims, **characterised in that** at least one flow channel is arranged inside the cooling device housing (13) and at least one other flow channel is arranged outside the cooling device housing (13).

9. The multistage compressor unit according to one of the preceding claims, **characterised in that** the flow channels comprise feed and discharge channels for a coolant.

10. The multistage compressor unit according to one of the preceding claims, **characterised in that** compressed air does not undergo diversion in an outlet cross-section.

## Revendications

1. Unité de compresseur à plusieurs étages, ladite unité de compresseur se composant d'un dispositif de charge à basse pression (2) comprenant un carter de compresseur à basse pression (4), se composant d'un dispositif de charge à haute pression (1) comprenant un carter de compresseur à haute pression (3), et se composant d'un dispositif de refroidissement (10), où le dispositif de refroidissement (10) présente un carter de dispositif de refroidissement (13), et le carter de dispositif de refroidissement (13) du dispositif de refroidissement (10) est indirectement relié au carter de compresseur à basse pression (4) du dispositif de charge à basse pression (2) et au carter de compresseur à haute pression (3) du dispositif de charge à haute pression (1), et le dispositif de refroidissement (10) présente des conduits d'écoulement pour un liquide de refroidissement, où une communication entre une sortie ou une entrée d'un dispositif de charge sous pression (1, 2), et entre une entrée ou une sortie du dispositif de refroidissement (10), forme comme un élément de liaison (8), où un premier côté de l'élément de liaison (8) correspond, en section, pratiquement à l'entrée ou à la sortie d'un dispositif de charge sous pression (1, 2), et un second côté de l'élément de liaison (8) correspond, en section, pratiquement à l'entrée ou à la sortie du dispositif de refroidissement (10), **caractérisée en ce que** des conduits d'écoulement prévus pour le liquide de refroidissement sont configurés dans le carter de compresseur à basse pression (4).

2. Unité de compresseur à plusieurs étages selon la revendication 1, **caractérisée en ce que** des conduits d'écoulement prévus pour le liquide de refroidissement sont configurés dans le carter de compresseur à haute pression (3).

3. Unité de compresseur à plusieurs étages selon l'une des revendications précédentes, **caractérisée en ce qu'**au moins un carter de compresseur sous pression (3, 4) d'un dispositif de charge sous pression (1, 2) présente une bride (7), où la section de la bride (7) est traversée par de l'air comprimé et par au moins un flux de liquide de refroidissement, et **en ce qu'**une communication entre une sortie ou une entrée d'un dispositif de charge sous pression (1, 2), et une entrée ou une sortie du dispositif de refroidissement (10), est configurée comme un raccord à bride.

4. Unité de compresseur à plusieurs étages selon l'une quelconque des revendications précédentes, **caractérisée en ce que** le dispositif de refroidissement (10) est relié à un circuit de liquide de refroidissement d'un système de climatisation.

5. Unité de compresseur à plusieurs étages selon l'une quelconque des revendications précédentes, **caractérisée en ce que** le dispositif de refroidissement (10) comprend un refroidisseur à faisceaux de tubes.

6. Unité de compresseur à plusieurs étages selon l'une quelconque des revendications précédentes, **caractérisée en ce que** les sections concernant les conduits d'écoulement prévus pour le liquide de refroidissement présentent, dans un carter de compresseur sous pression (3, 4), des sections d'entrée / de sortie qui sont disposées pratiquement dans un plan.

7. Unité de compresseur à plusieurs étages selon l'une quelconque des revendications précédentes, **caractérisée en ce que** les conduits d'écoulement sont disposés au moins partiellement les uns à côté des autres dans un carter de compresseur sous pression (3, 4).

8. Unité de compresseur à plusieurs étages selon l'une quelconque des revendications précédentes, **caractérisée en ce qu'**au moins un conduit d'écoulement est disposé à l'intérieur du carter de dispositif de refroidissement (13) et **en ce qu'**au moins un autre conduit d'écoulement est disposé à l'extérieur du carter de dispositif de refroidissement (13).

9. Unité de compresseur à plusieurs étages selon l'une quelconque des revendications précédentes, **caractérisée en ce que** les conduits d'écoulement comprennent des conduits d'alimentation et d'évacuation d'un liquide de refroidissement.

10. Unité de compresseur à plusieurs étages selon l'une quelconque des revendications précédentes, **caractérisée en ce que** de l'air comprimé ne subit aucun changement de direction dans une section de sortie.
